Europäisches Patentamt

European Patent Office

Office européen des brevets

(11) Numéro de publication: **0 203 862**
**B1**

## FASCICULE DE BREVET EUROPÉEN

(45) Date de publication du fascicule du brevet:
**10.08.88**

(21) Numéro de dépôt: **86401098.8**

(22) Date de dépôt: **23.05.86**

(51) Int. Cl.⁴: **B 01 D 13/00** //
**G21C19/30**

(54) Dispositif d'ultrafiltration d'un liquide sous pression et à haute température.

(30) Priorité: **29.05.85 FR 8508054**

(43) Date de publication de la demande:
**03.12.86 Bulletin 86/49**

(45) Mention de la délivrance du brevet:
**10.08.88 Bulletin 88/32**

(84) Etats contractants désignés:
**BE CH DE GB IT LI SE**

(56) Documents cité:
**FR-A-2 228 518**
**FR-A-2 407 012**
**FR-A-2 552 419**
**US-A-3 774 771**
**US-A-4 461 707**

(73) Titulaire: **FRAMATOME, Tour Fiat 1 place de la Coupole, F-92400 Courbevoie (FR)**

(72) Inventeur: **Dagard, Philippe, 20 avenue de l'Europe, F-78160 Marly Le Roi (FR)**
Inventeur: **Riviere, Jacques, 2 allée Ile Marante, F-92700 Colombes (FR)**

(74) Mandataire: **Polus, Camille, c/o Cabinet Lavoix 2, Place d'Estienne d'Orves, F-75441 Paris Cedex 09 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention concerne un dispositif d'ultrafiltration d'un liquide sous pression et à haute température l'invention concerne en particulier un dispositif d'épuration par ultrafiltration à chaud, du fluide primaire d'un réacteur nucléaire à eau sous pression.

De tels réacteurs comportent un circuit primaire dans lequel circule l'eau sous pression de refroidissement des assemblages combustibles du coeur du réacteur. Le circuit primaire est en communication avec le volume interne de la cuve renfermant le coeur et comporte des pompes de circulation du fluide primaire, des générateurs de vapeur et un pressuriseur reliés par des canalisations de grands diamètres et résistant à la pression. Le fluide primaire du réacteur peut être également mis en circulation dans certains circuits auxiliaires permettant son traitement et la modification de ses caractéristiques physiques ou chimiques.

Pendant sa circulation dans le circuit primaire ou dans les circuits auxiliaires le fluide de refroidissement vient en contact avec de nombreux composants qui sont pour la plupart réalisés ou revêtus avec un alliage de nickel qui permet de limiter l'attaque par le fluide primaire. Cependant, certains composants comme les sièges de vannes et de robinets ou même certaines portions de tuyauterie connaissent une certaine usure, si bien que le fluide primaire se charge en particules de très petites dimensions arrachées à ces composants ces particules sont amenées à circuler avec le fluide primaire et donc à traverser le coeur du réacteur ou elles sont soumises à un bombardement neutronique intense qui a pour effet de les activer. En articulier, les alliages résistant à l'usure qui renferment une certaine proportion de cobalt sont la cause de l'apparition de particules fortement activées.

Ces particules s'accumulent dans certaines parties des composants du réacteur, ce qui pose des problèmes très difficiles à résoudre au cours des opérations de maintenance du réacteur, ces opérations nécessitant des phases préalables de décontamination très difficiles à mettre en oeuvre.

D'autre part, l'eau d'appoint et les additifs introduits dans le fluide primaire grâce à un circuit auxiliaire tel que le circuit de contrôle volumétrique et chimique contiennent également des particules solides d'origines diverses qui sont activées lorsque le fluide primaire traverse le coeur du réacteur.

Il est donc nécessaire de traiter le fluide primaire périodiquement ou en continu pour abaisser la teneur en particules activées ou activables dans ce fluide primaire. Ces particules ont un diamètre moyen de 0,5 micromètre avec une proportion notable de particules d'un diamètre de l'ordre de 0,1 micromètre. Ces particules peuvent également se présenter sous forme colloidale, c'est-à-dire sous la forme d un gel non cristallisé.

Il est donc nécessaire d'effectuer l'épuration du fluide par un procédé tel que l'ultrafiltration et plus particulièrement par ultrafiltration à chaud, puisque la solubilité des produits polluants est plus forte à froid qu'à chaud.

On a donc envisagé d'utiliser des procédés d'ultrafiltration à chaud, sur le fluide primaire à sa température et à sa pression de service dans le réacteur, pour assurer son épuration pendant le fonctionnement du réacteur. Un tel procédé a été décrit dans le brevet français n°83-15130 (correspondant à EP-A-0 145 519; priorité: 23.09.83; date de publication de la demande: 19.6.85) au nom de la Société FRAMATOME. On a de plus décrit, dans cette demande de brevet, un dispositif d'ultrafiltration qui peut être intercalé sur la circulation du fluide primaire, à l'intérieur de l'enceinte de sécurité du réacteur. Un tel dispositif d'ultrafiltration qui est traversé par un fluide à une température voisine de 300° C et à une pression de l'ordre de $155.10^5$ Pa comporte une enveloppe résistant à la pression de très forte épaisseur en un matériau résistant à l'action corrosive du fluide primaire et de ses additifs. La paroi d'ultrafiltration est constituée par un ensemble de tubes composites constitués par une superposition de matériaux poreux homogénes. L'une des couches réalisée sous forme microporeuse sert de membrane de séparation de l'ultrafiltre, les autres couches constituant le support de la couche microporeuse. Les tubes sont fixés, à chacune de leurs extrémités à une plaque tubulaire, les plaques tubulaires étant elles-mêmes fixées à l'intérieur de l'enveloppe. L'une de ces plaques tubulaires correspondant à l'extrémité d'entrée des tubes limite avec la paroi de l'enveloppe une chambre, d'arrivée du fluide à épurer dans laquelle débouche la conduite d'amenée de ce fluide. Une conduite de récupération du filtrat débouche dans l'enveloppe, entre les deux plaques tubulaires et une conduite d'évacuation du concentrat est mise en communication avec la partie de l'enveloppe recevant le concentrat, située entre la plaque tubulaire de sortie des tubes et l'extrémité de l'enveloppe opposée à la chambre d'arrivée. On maintient le concentrat en circulation pour éviter le colmatage de la paroi d'ultrafiltration. Au cours d'une utilisation de longue durée, les tubes sont susceptibles de se colmater et la couche microporeuse déposée sur ces tubes risque de subir une usure qui dans ce cas peut aller même jusqu'à sa disparition complète. Dans tout appareil de ce type il est donc nécessaire, après un certain temps d'utilisation, de changer les tubes. Dans de tels filtres, les tubes, solidaires des plaques tubulaires qui sont elles-mêmes soudées sur les parois de l'enveloppe, ne peuvent être remplacés de façon simple, si bien qu'il est nécessaire d'effectuer le remplacement intégral du filtre lorsque les tubes sont colmatés ou usés.

D'autre part, la structure du filtre est telle que, pendant des transitoires thermiques rapides, il apparaît des dilatations différentielles entre les différentes parties du filtre, ce qui ne favorise pas la tenue mécanique du filtre et le maintien d'une bonne étanchéité entre les parties de ce filtre recevant le filtrat et les parties recevant le concentrat.

Enfin, le volume du liquide en circulation dans les tubes diminue au cours de la filtration, le filtrat traversant la paroi du tube alors que le concentrat dont le volume diminue continue à circuler dans le tube. La vitesse de circulation du fluide a donc tendance à diminuer vers l'extrémité des tubes si bien qu'il existe un risque de colmatage vers l'extrémité de sortie des tubes.

Le but de l'invention est donc de proposer un dispositif d'ultrafiltration d'un liquide sous pression et à haute température comportant une enveloppe résistant à la pression renfermant un ensemble de tubes qui constituent la paroi d'ultrafiltration et qui sont fixés dans une première plaque tubulaire à l'une de leurs extrémités, constituant l'extrémité d'entrée du liquide à filtrer, et dans une seconde plaque tubulaire, à leur autre extrémité, une chambre délimitée par la première plaque tubulaire et l'enveloppe dans laquelle débouche une conduite d'arrivée du liquide à filtrer, une conduite d'évacuation de filtrat et une conduite d'évacuation de concentrat débouchant également dans l'enveloppe, ce dispositif d'ultrafiltration devant permettre de remplacer facilement les tubes constituant la paroi de filtration, d'éviter des dilatations différentielles entre les éléments du filtre pendant son fonctionnement et d'obtenir une très grande efficacité de filtration, sans qu'il y ait colmatage de la paroi d'ultrafiltration, de façon préférentielle, dans certaines zones de cette paroi.

Dans ce but, le dispositif d'ultrafiltration comporte en outre, à l'intérieur de l'enveloppe résistant à la pression, ou première enveloppe, qui est constituée en deux parties séparables un ensemble de filtration amovible constitué par:

- une seconde enveloppe placée à l'intérieur de la première enveloppe de façon à ménager un espace continu entre sa paroi externe et la paroi interne de la première enveloppe, sur laquelle les plaques tubulaires sont fixées transversalement de façon à délimiter, à l'intérieur de la seconde enveloppe, une chambre de filtration renfermant les tubes située entre les deux plaques tubulaires et une chambre de distribution à la suite de la chambre de filtration, du côté de sortie des tubes,

- un premier ensemble de cloisons fixées à l'intérieur de la seconde enveloppe dans la chambre de filtration, délimitant des compartiments de circulation du filtrat s'étendant de façon continue dans la direction des tubes, entre les deux plaques tubulaires les cloisons de ce premier ensemble comportant des ouvertures à l'une de leurs extrémités de façon que chacun des compartiments communique avec deux compartiments voisins, à son extrémité voisine de la première plaque ou à son extrémité voisine de la seconde plaque respectivement, à l'exception de l'un des compartiments qui communique avec un seul compartiment voisin et d'un autre compartiment qui communique avec un seul compartiment voisin et avec l'espace compris entre les deux enveloppes dans lequel débouche la conduite d'évacuation du filtrat,

- et un second ensemble de cloisons fixées à l'intérieur de la chambre de distribution du concentrat délimitant des compartiments communiquant chacun avec les extrémités de sortie d'un ensemble de tubes, et la chambre d'arrivée du liquide à filtrer renferme également un cloisonnement délimitant des compartiments communiquant chacun avec les extrémités d'entrée d'un ensemble de tubes, les ensembles de tubes communiquant avec les compartiments de la chambre de distribution et avec les compartiments de la chambre d'arrivée respectivement étant choisis pour qu'une circulation à débit constant de liquide s'établisse dans les tubes, dans un sens ou dans l'autre, entre la chambre d'arrivée et la chambre de distribution, l'un des compartiments de la chambre d'arrivée communiquant avec la conduite d'évacuation du concentrat.

Afin de bien faire comprendre l'invention, on va maintenant décrire, en se référant aux figures jointes en annexe, un mode de réalisation d'un dispositif d'ultrafiltration suivant l'invention utilisable pour l'épuration de l'eau sous pression de refroidissement d'un réacteur nucléaire.

Dans ces figures,

- la Fig. 1 est une vue en perspective partiellement éclatée d'un dispositif de filtration suivant l'invention:

- la Fig. 2 est une vue en perspective éclatée de la chambre d'arrivée du liquide à épurer dans le filtre:

- la Fig. 3a est une vue en perspective partiellement éclatée de la partie supérieure du dispositif d'ultrafiltration, montrant la circulation du concentrat dans cette partie du dispositif:

- la Fig. 3b est une vue en perspective éclatée de la partie inférieure du dispositif d'ultrafiltration, montrant la circulation du concentrat dans cette partie du dispositif:

- la Fig. 4 est une vue en perspective éclatée de la partie supérieure du dispositif de filtration, montrant la circulation du filtrat à l'intérieur de cette partie du dispositif.

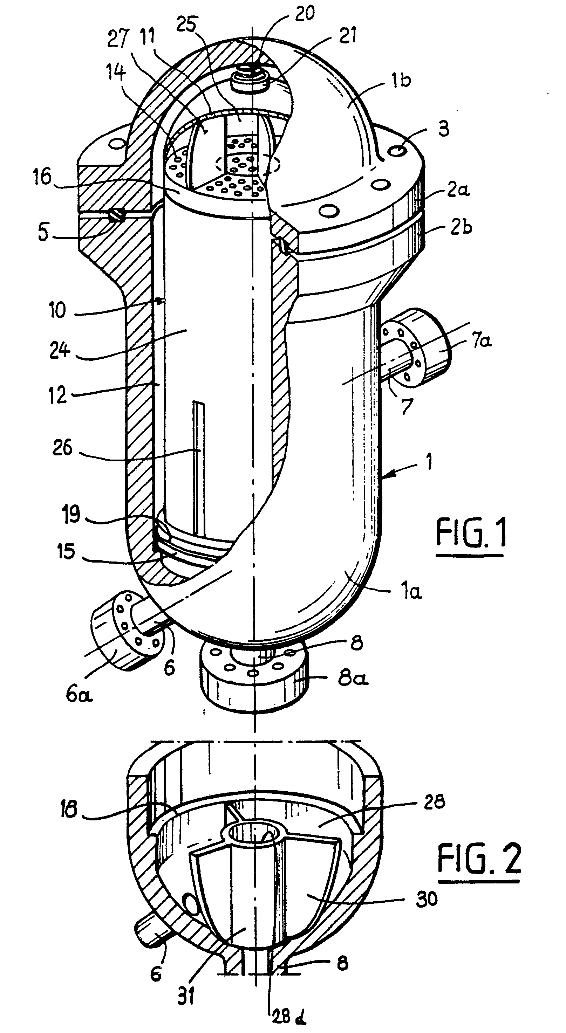

Sur la Fig. 1, on voit l'enveloppe externe résistant à la pression 1 d'un dispositif d'ultrafiltration suivant l'invention. Cette enveloppe externe de grande épaisseur est destinée à supporter la pression du fluide primaire d'un réacteur nucléaire et a une forme générale cylindrique à fond bombé. Cette enveloppe 1 est constituée de deux parties 1a et 1b qui sont assemblées entre elles par l'intermédiaire de deux flasques de grande épaisseur 2a et 2b assemblés par des vis engagées dans des trous 3 mis en coïncidence sur les flasques 2a et 2b. Pour assurer l'étanchéité et la tenue à la pression de l'enveloppe 1 de l'ultrafiltre, un joint 5 est intercalé entre les flasques 2a et 2b. Un serrage par mise en tension des vis engagées dans les trous 3 permet d'assurer une étanchéité parfaite du couvercle 1b par rapport au corps 1a de l'enveloppe du filtre. Trois tubulures 6, 7 et 8 de traversée du corps la de l'enveloppe externe 1 du filtre munies de flasques de raccordement respectifs 6a, 7a et 8a permettent de raccorder l'ultrafiltre a une conduite d'amenée d'eau à épurer, à une conduite d'évacuation de filtrat et à une conduite d'évacuation de concentrat respectivement.

A l'intérieur de l'enveloppe 1, est disposé un ensemble d'ultrafiltration désigné de façon générale par le repère 10.

Cet ensemble d'ultrafiltration 10 est entièrement contenu dans une enveloppe 11 de forme cylindrique fermée par un fond bombé constituant la seconde enveloppe du filtre 1. Cette seconde enveloppe 11 est placée à l'intérieur de l'enveloppe externe 1 de façon à ce qu'un espace continu 12 soit ménagé entre la surface externe de l'enveloppe 11 et la surface interne de l'enveloppe 1. L'enveloppe 11 renferme un ensemble de tubes droits 14 fixés à l'une de leurs extrémités ou extrémité d'entrée dans une plaque tubulaire 15 et à leur autre extrémité, ou extrémité de sortie, dans une plaque tubulaire 16. La désignation "d'entrée" ou "de sortie" pour les extrémités des tubes ne préjugent pas, dans la description ultérieure, du sens de circulation du liquide au niveau de ces extrémités.

Les plaques tubulaires 15 et 16 sont fixées transversalement à la seconde enveloppe 11, aux extrémités de sa partie cylindrique.

En se reportant à la Fig. 2, on voit que la surface intérieure de l'enveloppe 1 de grande épaisseur est usinée pour constituer une surface d'appui 18. Une gorge est usinée sur la plaque tubulaire 15 dans sa partie latérale externe pour recevoir un joint 19 qui assure l'étanchéité parfaite entre le filtrat et le concentrat. Lorsque l'ensemble d'ultrafiltration 10 est placé à l'intérieur de l'enveloppe 1, comme visible sur la Fig. 1, cet ensemble repose sur la portée 18 par l'intermédiaire de la plaque tubulaire 15, ce qui assure son appui parfait à l'intérieur de l'enveloppe 1; dans cette position, un espace continu 12 est ménagé entre les enveloppes 11 et 1. L'ensemble 10 peut être introduit dans l'enveloppe 1 par sa partie supérieure, lorsque le couvercle 1b est démonté. Une pièce d'appui 21 glacée au sommet de l'extrémité bombée de l'enveloppe 11 et un dispositif élastique resort 20 de grande raideur assurent la fixation de l'enveloppe 11 à l'intérieur de l'enveloppe 1, lorsque le couvercle 1b est monté et serré sur le corps 1a. Les portées d'appui et le ressort 20 assurent à eux seuls la fixation amoviblé de l'ensemble 10 dans la première enveloppe 1 résistant à la pression.

Les plaques tubulaires transversales délimitent à l'intérieur de l'enveloppe 11 une chambre de filtration 24 de forme cylindrique comprise entre les deux plaques tubulaires 15 et 16 et renfermant les tubes 14 ainsi qu'une chambre supérieure de distribution 25 de forme hémisphérique comprise entre la plaque tubulaire 16 et la paroi supérieure hémisphérique de l'enveloppe 11.

La chambre de filtration 24 communique avec l'espace 12 entre les enveloppes par l'intermédiaire d'une ouverture allongée 26 traversant la paroi cylindrique de l'enveloppe 11.

La chambre de distribution 25 renferme un cloisonnement 27 qui sera décrit plus en détail dans la suite du texte.

Comme il est visible sur la Fig. 2, la partie inférieure de l'enveloppe 1, en-dessous de la plaque 15 constitue une chambre d'arrivée 28 du fluide à épurer dans laquelle débouche la tubulure 6 d'amenée de fluide. La chambre d'arrivée 28 renferme un cloisonnement 30 délimitant dans cette chambre d'arrivée 28, trois compartiments périphériques 28a, 28b et 28c et un compartiment central 28d dans lequel débouche la tubulure 8 d'évacuation du filtrat. Lorsque l'ensemble 10 est en position dans l'enveloppe 1 comme représenté à la Fig. 1, la plaque tubulaire 15 vient reposer sur la partie supérieure du cloisonnement 30 ainsi que sur la portée 18 qui sont équipées l'une et l'autre de moyens d'étanchéité non représentés assurant une étanchéité relative entre les secteurs 28a, 28b, 28c.

Les tubes 14 sont des tubes droits en métal fritté revêtus intérieurement par une couche mince de céramique microporeuse constituant la couche d'ultrafiltration. L'ensemble des parois internes des tubes constitue ainsi la paroi d'ultrafiltration du dispositif. Toutefois, les extrémités des tubes engagées et dudgeonnées dans les plaques tubulaires ne sont pas revêtues de céramique microporeuse. De même ces extrémités peuvent être constituées de manchons métalliques rapportés à l'extrémité des tubes en métal fritté.

Le principe de l'ultrafiltration est bien connu. Le fluide à épurer est introduit dans les tubes où il vient en contact avec la paroi d'ultrafiltration, une partie du fluide traverse la paroi en se séparant de ses impuretés pour constituer le filtrat, le reste du fluide continuant à circuler dans les tubes pour constituer le concentrat dont la teneur en impuretés augmente au cours de la circulation du fluide.

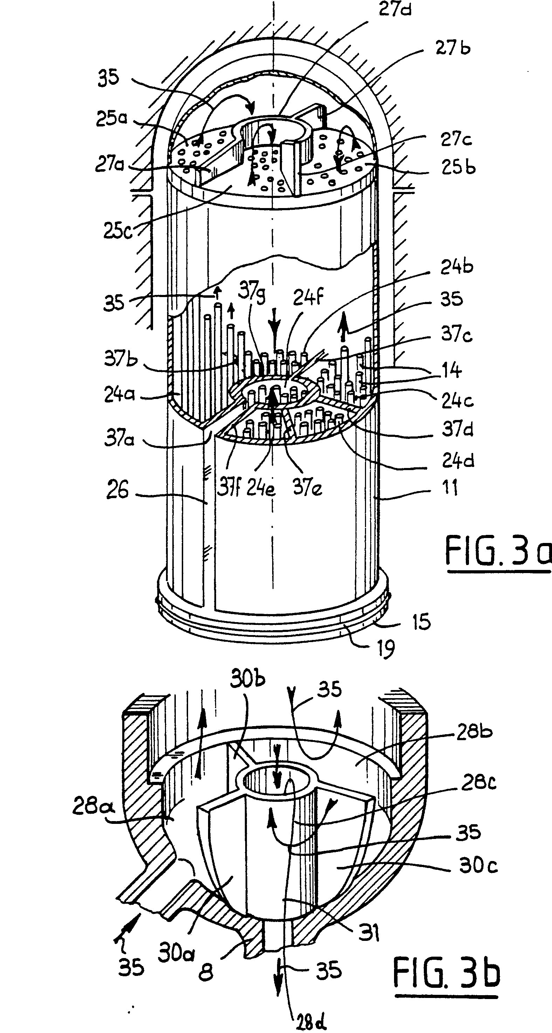

Sur les Fig. 3a et 3b, on a représenté par des flèches 35 la circulation du fluide à épurer et du concentrat, à l'intérieur des tubes 14 dans la chambre de filtration 24 et en dehors de ces tubes 14, dans la chambre d'arrivée 28 et dans la chambre de distribu tion supérieure 25. Pour faciliter la représentation, les cloisons 27a, 27b, 27c et 27d de la chambre de distribution 25 ont été représentées seulement partiellement, mais il est bien évident que ces cloisons sont en contact à leur partie supérieure avec la surface interne du fond bombé de l'enveloppe 11. Les cloisons radiales 27a, 27b et 27c et la cloison 27d en forme de portion de cylindre sont reliées de façon à constituer, dans la chambre de distribution 25, trois compartiments 25a, 25b et 25c totalement séparés et communiquant chacun avec les extrémités de sortie d'un ensemble de tubes 14.

Le cloisonnement 30 de la chambre d'arrivée 28 est constitué par trois cloisons radiales 30a, 30b et 30c reliées à une cloison tubulaire 31 disposée axialement dans le filtre. Ce cloisonnement délimite ainsi quatre compartiments séparés 28a, 28b, 28c et 28d dans la chambre 28. Le compartiment 28d est en communication directe avec la tubulure d'évacuation 8 du concentrat.

Le liquide à épurer entre dans le compartiment 28a par la tubulure 6 (flèche 35) puis est distribué dans les tubes 14 communiquant avec ce comparetiment 28a. Une partie du fluide est prélevée sous forme de filtrat pendant la circulation dans les tubes et le reste constituant du concentrat débouche dans le compartiment 25a de la chambre de distribution, l'ensemble des tubes dont l'extrémité d'entrée est en communication avec le compartiment 28a comportant des extrémités de sortie débouchant dans le compartiment 25a. En revanche, d'autres tubes débouchant dans le compartiment 25a ont leurs extrémités d'entrée en communication avec le compartment d'arrivée 28b. Le concentrat redescend donc dans les tubes 14 correspondant pour déboucher dans la chambre 28b. Cette chambre 28b communique non seulement avec ces tubes mais encore avec un ensemble de tubes dont l'extrémité de sortie débouche dans le compartiment 25b. Le concentrat remonte dans la chambre 25b à l'intérieur de laquelle débouchent également des tubes en communication avec le compartiment 28c de la chambre d'arrivée. Enfin, ce compartiment 28c communique avec des tubes débouchant eux-mêmes dans le compartiment 25c de la chambre de distribution 25. Ce compartiment 25c communique avec des tubes dont l'extrémité d'entrée débouche dans le compartiment central 28d qui lui-même communique avec la conduite d'évacuation de concentrat. Le concentrat circule donc suivant les flèches 35, à l'intérieur des tubes dans un sens et dans l'autre pour aboutir finalement dans la tubulure 8. Le concentrat est alors soit remis en circulation soit évacué et traité.

La disposition des cloisons 30 et 27 et la dimension des compartiments 28 et 25 des chambres d'arrivée et de distribution, respectivement, sont telles que le nombre de tubes utilisés pour la circulation successive du fluide dans la direction verticale, dans un sens et dans l'autre, est décroissant de façon à tenir compte de la diminution de volume du fluide venant du prélèvement de filtrat dans la chambre de filtration 24. Un calcul précis permet de déterminer quantitativement le nombre de tubes débouchant dans chacun des compartiments pour obtenir une vitesse pratiquement constante du fluide, pendant sa circulation dans les tubes du filtre.

On peut remarquer qu'il n'est pas nécessaire d'assurer une étanchéité parfaite entre les compartiments 28a, 28b, 28c, 28d de la chambre 28 de même qu'entre les compartiments 25a, 25b, 25c de la chambre 25, ces compartiments recevant tous du concentrat même si la teneur en impuretês de ce concentrat est différente d'un compartiment à un autre. En revanche, il est impératif d'assurer une étanchéité parfaite entre le concentrat et le filtrat, c'est-à-dire entre la zone 24 et la zone 28, ceci étant réalisé par l'intermédiaire du joint 19.

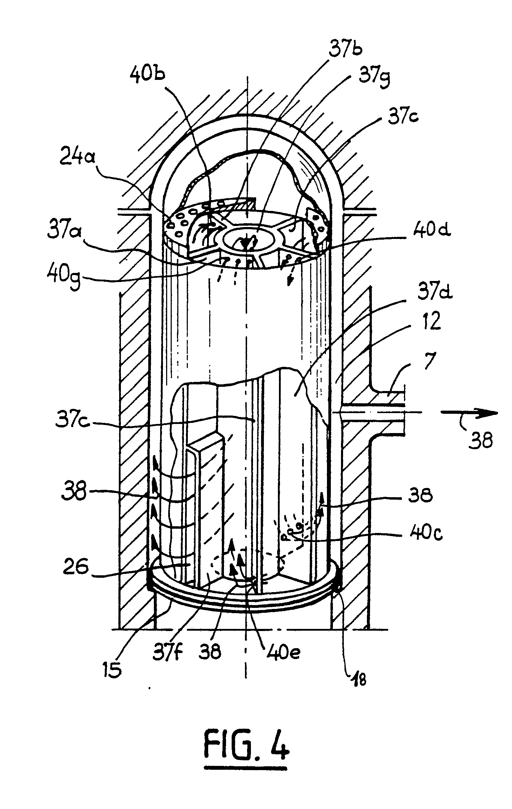

En se reportant aux figures 3a et 4, on voit que la chambre de filtration 24 est séparée par des cloisons radiales 37a à 37f et par une cloison centrale en forme de portion de cylindre 37g en six compartiments 24a à 24f.

Le compartiment central 24f communique directement par l'espace ménagé entre les cloisons 37a et 37f avec l'ouverture 26 traversant l'enveloppe 11 pour mettre ce compartiment 24f en communication avec l'espace 12 et la tubulure d'évacuation de filtrat 7.

Sur la Fig. 4, on voit la circulation du filtrat dans les divers compartiments de la chambre de filtration 24, schématisée par les flèches 38.

Le compartiment 24a qui est le premier compartiment dans lequel passe le fluide à épurer reçoit le filtrat dans son volume interne et communique par des ouvertures 40b à la partie supérieure de la cloison 37b avec le compartiment voisin 24b. Les compartiments 24b, 24c, 24d et 24e communiquent chacun avec deux compartiments voisins par des ouvertures 40 correspondantes disposées successivement à la partie supérieure et à la partie inférieure de la paroi 37 de séparation du compartiment et des compartiments voisins. C'est ainsi que les ouvertures 40c et 40e sont placées à la partie inférieure des parois 37d et 37f et que les ouvertures 40c, 40d, 40g sont placées à la partie supérieure des parois 37b, 37d et 37g respectivement.

Le dernier compartiment 24f est en communication avec le compartiment voisin 24e uniquement et avec l'espace 12 entre les enveloppes par l'intermédiaire de l'espace ménagé entre les cloisons 37a et 37f et l'ouverture allongée 26 dans la paroi de l'enveloppe 11. Il en résulte une circulation du filtrat dans le sens des flèches 38, suivant la longueur des compartiments 24a à 24f, dans un sens ou dans l'autre, entre les plaques tubulaires 15 et 16, sans création de zones d'eaux mortes dans l'intervalle 12.

Les ouvertures 40 prévues soit à la partie inférieure, au voisinage de la plaque tubulaire 15, soit à la partie supérieure, au voisinage de la plaque tubulaire supérieure 16 des cloisons de séparation 37 sont telles qu'elles permettent de créer une perte de charge dans le filtrat en circulation équivalant à la perte de charge subie par le concentrat dans les tubes 14. On annule ainsi les différences de pression de part et d'autre de la paroi des tubes.

D'autre part, le filtrat en provenance du compartiment 24f remplissant l'espace 12 permet d'équilibrer la pression de part et d'autre de l'enveloppe 11, si bien que cette enveloppe qui ne subit pas de surpression peut être d'une épaisseur limitée. Ceci réduit d'autant la masse de l'ensemble de filtration amovible 10.

La séparation du filtrat et du concentrat est assurée dans la partie inférieure du filtre par le joint 19 porté par la plaque tubulaire 15 en appui sur la portée 18 usinée sur la surface interne de l'enveloppe 1 et par le cloisonnement 30.

Les principaux avantages du dispositif suivant l'invention sont une très bonne efficacité de filtration grâce à un parcours de grande longueur du fluide à travers les tubes malgré un encombrement réduit du dispositif d'ultrafiltration, une vitesse constante de circulation du fluide dans les tubes et une circulation du filtrat permettant d'homogénéiser la pression et la température dans tout le dispositif de filtration. De plus, l'ensemble de filtration amovible peut être facilement extrait de l'enveloppe sous pression, pour son remplacement ou sa réparation. De même sa remise en place est très facile à réaliser avec des moyens de levage et de manutention classiques.

L'invention ne se limite pas au mode de réalisation qui a été décrit; c'est ainsi qu'on peut imaginer l'utilisation d'un nombre différent de cloisons et de compartiments dans la chambre d'arrivée, dans la chambre de filtration et dans la chambre de distribution du filtre, qu'on peut imaginer des formes d'enveloppe différentes de celles qui ont été décrites et qu'on peut réaliser ces enveloppes et ces cloisons en tout matériau compatible avec les caractéristiques physiques et chimiques du liquide à traiter.

On peut utiliser des tubes d'une structure et d'une composition différentes pour constituer la paroi d'ultrafiltration.

Enfin, le dispositif peut être utilisé non seulement pour l'épuration du fluide primaire d'un réacteur nucléaire à eau sous pression mais encore pour la purification de liquides autres que l'eau, par exemple dans l'industrie chimique.

**Revendications**

1. Dispositif d'ultrafiltration d'un liquide sous pression et à haute température comportant une enveloppe (1) résistant à la pression renfermant un ensemble de tubes (14) qui constituent la paroi d'ultrafiltration et qui sont fixés dans une première plaque tubulaire (15) à l'une de leurs extrémités constituant l'extrémité d'entrée du liquide à filtrer et dans une seconde plaque tubulaire (16) à leur autre extrémité, une chambre (28) délimitée par la première plaque tubulaire (15) et l'enveloppe (1) dans laquelle débouche une conduite (6) d'arrivée du liquide à filtrer, une conduite (7) d'évacuation de filtrat et une conduite (8) d'évacuation de concentrat débouchant également dans l'enveloppe (1), caractérisé par le fait qu'il comporte en outre, à l'intérieur de l'enveloppe (1) résistant à la pression, ou première enveloppe, qui est constituée en deux parties séparables (1a, 1b) un ensemble (10) de filtration amovible constitué par:

- une seconde enveloppe (11) placée à l'intérieur de la première enveloppe (1) de façon à ménager un espace continu (12) entre sa paroi externe et la paroi interne de la première enveloppe (1), sur laquelle les plaques tubulaires (15, 16) sont fixées transversalement de façon à délimiter, à l'intérieur de la seconde enveloppe (11), une chambre de filtration (24) renfermant les tubes (14) située entre les deux plaques tubulaires (15, 16) et une chambre de distribution (25) à la suite de la chambre de filtration (24) du côté de la sortie des tubes,

- un premier ensemble de cloisons (37) fixées à l'intérieur de la seconde enveloppe (11) dans la chambre de filtration (24), délimitant des compartiments (24a, 24b, 24c, 24d, 24e, 24f) de circulation du filtrat s'étendant de façon continue dans la direction des tubes (24) entre les deux plaques tubulaires (15, 16), les cloisons de ce premier ensemble comportant des ouvertures (40) à l'une de leurs extrémités de façon que chacun des compartiments (24) communique avec deux compartiments voisins, à son extrémité voisine de la première plaque (15) ou à son extrémité voisine de la seconde plaque (16) respectivement, à l'exception de l'un des compartiments (24a) qui communique avec un seul compartiment voisin (24b) et d'un autre compartiment (24f) qui communique avec un seul compartiment voisin (24e) et avec l'espace (12) compris entre les deux enveloppes dans lequel débouche la conduite d'évacuation du filtrat (7),

- et un second ensemble de cloisons (27) fixées à l'intérieur de la chambre (25) de distribution du concentrat, délimitant des compartiments (25a, 25b, 25c) communiquant chacun avec les extrémités de sortie d'un ensemble de tubes (14),

- et que la chambre (28) d'arrivée du liquide à filtrer renferme également un cloisonnement (30) délimitant des compartiments (28a, 28b, 28c, 28d) communiquant chacun avec les extrémités d'entrée d'un ensemble de tubes (14), les ensembles de tubes (14) communiquant avec les compartiments de la chambre de distribution (25) et avec les compartiments de la chambre d'arrivée (28) respectivement étant choisis pour qu'une circulation à débit constant de liquide s'établisse dans les tubes (14), dans un sens ou dans l'autre, entre la chambre d'arrivée (28) et la chambre de distribution (25), l'un des compartiments (28d) de la chambre d'arrivée (28) communiquant avec la conduite (8) d'évacuation du concentrat.

2. Dispositif d'ultrafiltration suivant la revendication 1, caractérisé par le fait que les enveloppes (1 et 11) sont symétriques de révolution autour d'un axe vertical commun et que l'ensemble de filtration (10) repose sur une portée (18) usinée sur la surface intérieure de l'enveloppe (1), par l'intermédiaire d'une des plaques tubulaires (15) située à sa partie inférieure et comportant une gorge sur sa surface latérale, un joint (19) étant positionné dans cette gorge pour assurer l'étanchéité entre le filtrat et le concentrat.

3. Dispositif d'ultrafiltration suivant la revendication 2, caractérisé par le fait qu'un dispositif élastique (20) est intercalé entre la partie supérieure de la seconde enveloppe (11) et une partie correspondante de la surface interne de la première enveloppe (1), pour le maintien de l'ensemble de filtration à l'intérieur de l'enveloppe 1.

4. Dispositif d'ultrafiltration suivant la revendication 1, caractérisé par le fait que les compartiments successifs (28a, 28b, 28c, 28d, de la chambre d'arrivée (28) et les compartiments successifs (25a, 25b, 25c) de la chambre de distribution (25) sont en communication avec un nombre de tubes (14) qui va en diminuant dans le sens de circulation du concentrat.

5. Dispositif d'ultrafiltration suivant la revendication 1 dans le cas où les enveloppes 1 et 11 sont à symétrie de révolution autour d'un même axe, caractérisé par le fait que le cloisonnement (30), à l'intérieur de la chambre (28), comporte une cloison cylindrique (31) centrale ayant pour axe l'axe commun aux enveloppes (1 et 11) et délimitant un compartiment (28d) de la chambre (28) en communication avec la conduite (8) d'évacuation du concentrat ainsi que des cloisons radiales (30a, 30b, 30c) fixées sur la cloison (31), à l'extérieur de celle-ci.

6. Dispositif d'ultrafiltration suivant la revendication 5, caractérisé par le fait que les cloisons (27) de la chambre de distribution (25) comportent une cloison centrale (27d) en forme de portion de cylindre limitée par deux génératrices ayant pour axe l'axe commun aux enveloppes (1) et (11) et des cloisons radiales (27a, 27b, 27c) fixées sur la cloison centrale (27d) et à l'extérieur de celle-ci, deux de ces cloisons (27a, 27c) étant fixées sur la cloison (27d) le long des génératrices d'extrémité de cette cloison (27d).

7. Dispositif d'ultrafiltration suivant la revendication 1, dans le cas où les enveloppes (1) et (11) sont symétriques de révolution autour d'un même axe, caractérisé par le fait que les cloisons (37) de la chambre de filtration (24) comportent une cloison centrale cylindrique (37g) ayant pour axe l'axe commun aux enveloppes (1) et (11) et présentant une ouverture sur une partie de sa longueur et des cloisons radiales (37a, 37b, 37c, 37d, 37e et 37f) fixées sur la cloison cylindrique (37g), suivant plusieurs génératrices et à l'extérieur de celle-ci, deux de ces cloisons (37a, 37f) étant fixées le long des bords de l'ouverture de la cloison cylindrique (37), ces cloisons (37a) et (37f) joignant cette ouverture à une ouverture (26) traversant la paroi de l'enveloppe (11), pour permettre le passage du filtrat du compartiment (24f) délimité par la cloison (37g) à l'espace (12) entre les enveloppes (11) et (1).

**Patentansprüche**

1. Ultrafiltrationsvorrichtung für eine unter Druck stehende Flüssigkeit bei hoher Temperatur mit einer dem Druck standhaltenden Hülle (1), die eine Gruppe von Rohren (14) umschließt, die die Ultrafiltrationswandung bilden und die in einem ersten Rohrboden (15) mit denjenigen Enden befestigt sind, die das Eingangsende der zu filternden Flüssigkeit bilden und die in einem zweiten Rohrboden (16) befestigt sind, der an ihrem anderen Ende angeordnet ist, wobei eine Kammer (28) vorgesehen ist, die durch den ersten Rohrboden (15) und die Hülle (1) eingegrenzt ist in der eine Zuleitung (6) für die zu filtrierende Flüssigkeit mündet und von der eine Leitung (7) zum Ablassen des Filtrats und eine Leitung (8) zum Ablassen des Konzentrats ausgehen, dadurch gekennzeichnet, daß die Vorrichtung ferner im Inneren der dem Druck widerstehenden Hülle (1) eine erste Hülle aufweist, die aus zwei voneinander trennbaren Teilen (1a, 1b) und einer abnehmbaren Filtrationseinheit (10) besteht, die wiederum sich zusammensetzt aus:
- einer zweiten Hülle (11) die im Inneren der ersten Hülle derart angeordnet ist, daß sie einen durchgehenden Raum (12) zwischen seiner äußeren Wandung und der inneren Wandung der ersten Hülle (1) bildet, auf der die Rohrböden (15, 16) quer angeordnet sind, derart, daß im Inneren der zweiten Hülle (11) eine Filtrationskammer (24) eingrenzen, die die Rohre (14) umschließt, die zwischen den beiden Rohrböden (15, 16) und einer Verteilerkammer (25) auf eine Filtrationskammer (24) ausgangsseitig der Rohre gelegen ist,
- einer ersten Gruppe von Zwischenwandung, die im Inneren der zweiten Hülle (11) in der Filtrationskammer (24) angeordnet sind und Abteile (24a, 24b, 24c, 24d, 24e, 24f) zur Zirkulation des Filtrats eingrenzen, und sich durchgängig in der Richtung der Rohre (24) zwischen den beiden Rohrböden (15, 16) erstrecken, wobei die Zwischenwände dieser ersten Gruppe Öffnungen (40) an einem ihrer Enden derart aufweisen, daß jedes der Abteile (24) mit den zwei benachbarten Abteilen in Verbindung steht an dem Ende, das in der Nähe des ersten Rohrbodens (15) liegt bzw. an dem Ende, das benachbart zum zweiten Rohrboden (16) liegt, mit Ausnahme der Abteile (14a), die mit einem einzigen benachbarten Abteil (14b) in Verbindung stehen und eines weiteren Abteils (14f) das mit einem einzigen benachbarten Abteil (14e) und mit dem Raum (12) in Verbindung steht, der zwischen den beiden Hüllen besteht, in dem die Ablaßleitung des Filtrats (7) mündet, und
- einer zweiten Gruppe von Zwischenwänden (27) die im Inneren der Verteilerkammer (25) des Konzentrats befestigt sind und die Abteile (25a, 25b, 25c) eingrenzen, die jeweils mit den Auslaßenden einer Rohrgruppe (14) in Verbindung stehen, und dadurch, daß die Einlaßkammer (28) der zu filternden Flüssigkeit ebenfalls eine offene Zwischenwand (30) umfaßt, die Abteile (28a, 28b, 28c, 28d) unterteilt, die jeweils mit den Eingangsenden einer Gruppe von Rohren (14) in Verbindung stehen, wobei die Rohrgruppen (14), die mit den Abteilen der Verteilerkammer (25) in Verbindung stehen bzw. die mit den Abteilen der Einlaßkammer (28) in Verbindung stehen so gewählt sind, daß sich eine Flüssigkeitszirkulation mit konstantem Durchsatz in den Rohren (14) in der einen oder anderen Richtung zwischen der Eingangskammer (28) und der Verteilerkammer (25) einstellt, wobei eines der Abteile (28d) der Eingangskammer (28) mit der Ablaßleitung (8) für das Konzentrat in Verbindung steht.

2. Ultrafiltrationsvorrichtung nach Anspruch 1, dadurch gekennzeichnet, daß die Hüllen (1) und (11) rotationssymmetrisch um eine gemeinsame vertikale Achse sind und dadurch, daß die Filtrationseinheit (10) auf einer Lagerfläche (18) ruht, die auf der Innenseite der Hülle (1) ausgearbeitet ist unter Zwischenschaltung eines der Rohrböden (15), der in dessen unteren Bereich angeordnet ist und auf seiner Seitenfläche eine Nut aufweist und wobei in dieser Nut eine Dichtung (19) angeordnet ist, die die Dichtheit zwischen dem Filtrat und dem Konzentrat gewährleistet.

3. Ultrafiltrationsvorrichtung nach Anspruch 2, dadurch gekennzeichnet, daß eine elastische Vorrichtung (20) zwischen dem oberen Bereich der zweiten Hülle (11) und einem entsprechenden Bereich der inneren Oberfläche der ersten Hülle (1) vorgesehen ist, zur Halterung der Filtrationseinheit im Inneren der Hülle (1).

4. Ultrafiltrationsvorrichtung nach Anspruch 1, dadurch gekennzeichnet, daß die aufeinanderfolgenden Abteile (28a, 28b, 28c, 28d) der Eingangskammer (28) und die aufeinanderfolgenden Abteile (25a, 25b, 25c) der Verteilerkammer (25) mit einer Anzahl von Rohren (14) in Verbindung stehen, die in Richtung der Zirkulation des Konzentrats verlaufen und deren Anzahl sich in dieser Richtung vermindert.

5. Ultrafiltrationsvorrichtung nach Anspruch 1, wobei die Hüllen (1 und 11) rotationssymmetrisch um dieselbe Achse sind, dadurch gekennzeichnet, daß die Zwischenwandung (30) im Inneren der Kammer (28) eine zylinderförmige zentrale Wandung (31) aufweist, deren Achse mit der gemeinsamen Achse der Hüllen (1 und 11) zusammenfällt und die ein Abteil (28d) der Kammer (28) eingrenzt, das in Verbindung mit der Ablaßleitung (8) des Konzentrats steht, sowie radiale Wandungen (30a, 30b, 30c) die auf der Wandung (31) an dessen Außenseite befestigt sind.

6. Ultrafiltrationsvorrichtung nach Anspruch 5, dadurch gekennzeichnet, daß die Wandungen (27) der Verteilerkammer (25) eine zentrale Wandung (27d) in Form eines Teils eines Zylinders aufweist, der durch zwei Erzeugende begrenzt ist und dessen Achse mit der gemeinsamen Achse der Hüllen (1 und 11) zusammenfällt und mit radialen Wandungen (27a, 27b, 27c) die auf der zentralen Wandung (27d) an dessen Außenseite befestigt sind, wobei zwei dieser Wandungen (27a, 27c) entlang der Erzeugenden der Enden dieser Wandung (27d) befestigt sind.

7. Ultrafiltrationsvorrichtung nach Anspruch 1, wobei die Hüllen (1) und (11) roationssymmetrisch um eine selbe Achse sind, dadurch gekennzeichnet, daß die Wandungen (37) der Filtrationskammer (24) eine zentrale zylinderförmige Wandung (37g) aufweisen, dessen Achse mit der gemeinsamen Achse der Hüllen (1) und (11) zusammenfällt und die eine Öffnung in einem Teil ihrer Länge sowie radial verlaufende Wandungen (37a, 37b, 37c, 37d, 37e und 37f) aufweist, die auf der zylinderförmigen Wandung (37g) entlang mehrerer Erzeugender und an dessen Außenseite befestigt sind, wobei zwei dieser Wandungen (37a, 37f) entlang der Ränder der Öffnung der zylinderförmigen Wandung (37g) verlaufen, und die Wandungen (37a) und (37f) diese Öffnung mit einer Öffnung (26) verbinden, die die Wandung der Hülle (11) durchquert, um den Durchgang des Filtrats aus dem Abteil (24f), das durch die Wandung (37g) eingegrenzt, wird, in dem Raum (12) zwischen den Hüllen (11) und (1) zu gewährleisten.

**Claims**

1. A device por the ultrafiltration of a pressurized high-temperature liquid, comprising a pressure-resistant casing (1) containing an assembly of tubes (14) which form the ultrafiltration wall and are attached to a first tube plate (15), forming at one of their ends the inlet end for the liquid to be filtered, and to a second tube plate (16) at their other end, a chamber (28) bounded by the first tube plate (15) and the casing (1), into which a pipe (6) discharges which supplies the liquid to be filtered, a filtrate discharge pipe (7) and a concentrate discharge pipe (8) also discharging into the casing (1), characterized in that it also comprises, inside the pressure-resistant casing (1) or first casing, which consists of two separable parts (1a, 1b), a detachable filtration assembly (10) formed by:
- a second casing (11) which is placed inside the first casing (1) so as to provide a continuous space (12) between its outer wall and the inner wall of the first casing (1) and on which the tube plates (15, 16) are attached transversely so as to bound, inside the second casing (11), a filtration chamber (24), containing the tubes (14) and located between the two tube plates (15, 16), and a distribution chamber (25) following the filtration chamber (24) in the direction of the tube outlet;

- a first set of partitions (37) which are attached inside the second casing (11) in the filtration chamber (24) and bound filtrate circulation compartments (24a, 24b, 24c, 24d, 24e, 24f) extending continuously in the direction of the tubes (24) between the two tube plates (15, 16), the partitions of this first set having orifices (40) at one of their ends, so that each of the compartments (24) communicates with two adjacent compartments at its head adjacent the first plate (15) or its end adjacent the second plate (16) respectively, except for one of the compartments (24a), which communicates with a single adjacent compartment (24b), and another compartment (24f), which communicates with a single adjacent compartment (24e), and with the space (12) which is contained between the two casings and into which the filtrate discharge pipe (7) discharges;

- and a second set op partitions (27) which are attached inside the concentrate distribution chamber (25) and bound compartments (25a, 25b, 25c) each communicating with the inlet ends of an assembly of tubes (14);

- and the inflow chamber (28) for the liquid to be filtered likewise contains a partitioning (30) which bounds compartments (28a, 28b, 28c, 28d) each communicating with the inlet ends of an assembly of tubes (14), the assemblies of tubes (14) communicating with the compartments of the distribution chamber (25) and the compartments of the inflow chamber (28) respectively being so selected that a circulation with a constant flow rate of liquid is set up in the tubes (14), in one direction or the other, between the inflow chamber (28) and the distribution chamber (25), one of the compartments (28d) of the inflow chamber (28) communicating with the concentrate discharge pipe (8).

2. An ultrafiltration device according to Claim 1, characterized in that the casings (1) and (11) are symmetrical in terms of revolution around a common vertical axis, and the filtration assembly (10) rests on a bearing surface (18) machined on the inner surface of the casing (1) by means of one op the tube plates (15) located in its lower part and having a groove in its lateral surface, a gasket (19) being positioned in this groove to ensure sealing tightness between the filtrate and the concentrate.

3. An ultrafiltration device according to Claim 2, characterized in that a resilient device (20) is inserted between the upper part of the second casing (11) and a corresponding part of the inner surface of the first casing (1), to retain the filtration assembly inside the casing (1).

4. An ultrafiltration device according to Claim 1, characterized in that the successive compartments (28a, 28b, 28c, 28d) of the inflow chamber (28) and the successive compartments (28a, 28b, 28c) of the distribution chamber (25) communicate with a number of tubes (14) which decrease in the direction of circulation of the concentrate.

5. An ultrafiltration device according to Claim 1, wherein the casings 1 and 11 are symmetrical in terms of revolution around the same axis, characterized in that the partitioning (30) inside the chamber (28) comprises a cylindrical partition (31) whose axis is the axis common to the casings (1 and 11) and which bounds a compartment (28d) of the chamber (28) in communication with the concentrate discharge pipe (8) and radial partitions (30a, 30b, 30c) attached to the partition (31) on its outside.

6. An ultrafiltration device according to Claim 5, characterized in that the partitions (27) of the distribution chamber (25) comprise a central partition (27d) in the form of a cylindrical portion, limited by two generatrices, the axis of which is the axis common to the casings (1) and (11) and radial partitions (27a, 27b, 27c) fastened to the central partition (27d) on its outside, two of the partitions (27a, 27c) being attached to the partition (27d) along the end generatrices of such partition (27d).

7. An ultrafiltration device according to Claim wherein the casings (1) and (11) are symmetrical in terms of revolution around the same axis, characterized in that the partitions (37) of the filtration chamber (24) comprise a central cylindrical partition (37g) the axis of which is the axis common to the casings (1) and (11) and which has an orifice over a portion of its length, and radial partitions (37a, 37b, 37c, 37d, 37e and 37f) fastened to the cylindrical portion (37g) along a number of generatrices and on its outside, two of the partitions (37a, 37f) being attached along the edges of the orifice in the cylindrical partition (37g), the partitions (37a) and (37f) joining this orifice to an orifice (26) extending through the wall of the casing (11) to enable the filtrate to pass from the compartment (24f) bounded by the partition (37g) to the space (12) located between the casings (11) and (1).

0 203 862

FIG.1

FIG.2

0 203 862

FIG. 3a

FIG. 3b

FIG. 4